# EUROPEAN PATENT SPECIFICATION

(11) **EP 2 428 871 B1**
(45) Date of publication and mention of the grant of the patent: **09.03.2016**
(21) Application number: 11191718.3
(22) Date of filing: 06.09.2007
(51) Int. Cl.: G06F 3/01

(54) **LOCALIZED HAPTIC FEEDBACK**
LOKALISIERTES HAPTISCHES FEEDBACK
RETOUR HAPTIQUE LOCALISÉ

(30) Priority: 14.09.2006 US 531867
(43) Date of publication of application: 14.03.2012
(62) Divisional of application: 07841939.7
(73) Proprietor: Immersion Corporation, San Jose, CA 95134 (US)
(72) Inventor: Olien Neil Thomas, Montreal, Québec H4B 2V3 (CA); Grant, Danny A., Montreal, Québec H2S 2C8 (CA); Gomez, Daniel H., Newton, MA Massachusetts 02459 (US)
(74) Representative: Hofstetter, Schurack & Partner

(56) References cited:
- DE-A1- 19 962 552
- US-A- 5 887 995
- US-A1- 2006 046 031

## Description

### FIELD OF THE INVENTION

One embodiment of the present invention is directed to haptic feedback. More particularly, one embodiment of the present invention is directed to localizing haptic feedback to a specific region.

### BACKGROUND INFORMATION

Humans interface with electronic and mechanical devices in a variety of applications, and the need for a more natural, easy-to-use, and informative interface is a constant concern. In an automotive environment, the predominate interface is still a mechanical button or dial. One reason for the popularity of this kind of interface is that the driver of an automobile typically must engage a button or dial while maintaining a view of the road. Mechanical devices allow the driver to feel a mechanical button or dial.

US 5 887 995 A discloses a computer system including a touchpad with one or more overlays providing the computer system with various input control functions. The overlay includes tactile response elements to provide tactile feedback to the operator as an indication that a portion of the overlay has been pressed.

DE 19 962 552 A1 discloses a touch screen having multiple individual screen surface elements, at least a part of which are grouped into one or more touch operating elements. At least one of the surface elements is movably arranged in a positioning direction that is nonparallel to the corresponding screen plane. A controllable actuator is provided for controllably moving the respective movable screen surface element.

US 2006/046031 A1 discloses a control panel for a device which includes a graphical user interface (GUI) which displays several control icons that represent various control functions for the device. The control icons on the GUI have tactile detectability which is provided by either vibrotactile display, electrotactile display, or a combination of the two.

However, having mechanical buttons and dials introduces several disadvantages. For one, any type of mechanical interface is subject to wear and degradation. Second, buttons and dials on an automobile dashboard include cracks and crevices that build up dirt and become unsightly and unsanitary. Finally, many automobile manufacturers attempt to create a dashboard having a futuristic sleek look, and mechanical buttons can detract from this appearance.

It is known to use force feedback or tactile feedback (collectively referred to herein as "haptic feedback") in combination with a touchpad or touch control "buttons" in order to eliminate mechanical buttons. However, known haptic feedback devices tend not to isolate the feedback (i.e., vibration) within the boundaries of a specific "button". In many environments, this might not be a large problem. However, in an automobile environment and other environments where a user is not looking at the button when it is being "pressed", it is more important to isolate the haptic feedback to only the targeted region.

Based on the foregoing, there is a need for a system and method in which haptic feedback is applied to a touch control so that the feedback is isolated to a targeted region.

### SUMMARY OF THE INVENTION

One embodiment of the present invention is a surface that transmits a haptic feedback generated by an actuator that is coupled to a deformation region of said surface. The surface includes a first region having a first level of stiffness, a second region having a second level of stiffness, and a third region having a third level of stiffness, wherein the second level of stiffness is less than the first level of stiffness and the third level of stiffness. The second region in combination with the third region defines said deformation region within which the haptic feedback is generally localized, said surface is to be actuated by a user on said deformation region.

### BRIEF DESCRIPTION OF THE DRAWINGS

Fig. 1 is a plan view of the front side of an automotive dashboard in accordance with one embodiment of the present invention.
Fig. 2 is a cross-sectional view of the rear side of a surface and an actuator in accordance with one embodiment of the present invention.
Fig. 3 is a plan view of a portion of the rear side of the surface.
Fig. 4 is a plan view of a portion of the rear side of the surface in accordance with one embodiment of the present invention.

### DETAILED DESCRIPTION

One embodiment of the present invention is a surface having a reduced stiffness region and an actuator coupled to the region. The actuator creates an isolated haptic feedback effect within the reduced stiffness region.

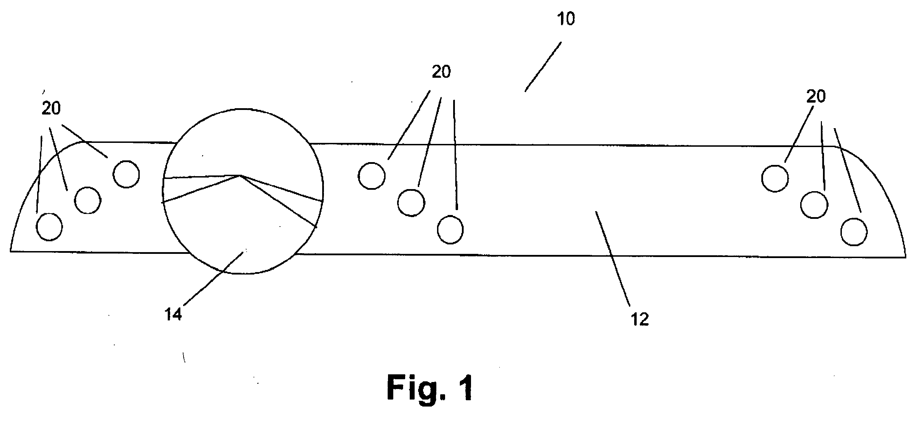

Fig. 1 is a plan view of the front side of an automotive dashboard 10 in accordance with one embodiment of the present invention. Dashboard 10 is formed from a contiguous surface or panel 12. A plurality of buttons 20 are formed on surface 12. A steering wheel 14 is coupled to dashboard 10. Other components typically present on a dashboard, such as gauges, dials, etc., are not shown in Fig. 1.

Each button 20 in one embodiment is represented on the front side of dashboard 10 as a graphical icon or other indication of the geographic location of the button. Otherwise, surface 12 in the areas of buttons 20 is contiguous and smooth on the front side, and includes no cracks or crevices that can be unsightly and retain dirt.

In one embodiment, surface 12 is formed from a layer of wood laminated to a layer of metal. The wood layer is on the front side of surface 12. In other embodiments, surface 12 can be formed of other materials such as, for example, glass, plastic, composite materials such as carbon fiber, and stone. In one embodiment, in each area substantially behind the location of each button 20, a portion of the metal and wood layers from the rear side of surface 12 is removed to create a thinner region having a lower level of stiffness than the regions of surface 12 that are not altered or thinned.

In general, "stiffness" disclosed herein, i.e., flexural or bending stiffness, relates to the amount of deflection of a material resulting from an applied normal force. This is a function of cross-section (thickness), location of the applied force, and a material property of the material used. When defining stiffness, the concept of Young's modulus and moment is typically applied, i.e., where deflection = El = flexural modulus of elasticity (force x length²) x moment of inertia (length⁴). However, typical calculations for El use "Timoshenko" equations which assume constant cross section, rigid supports at the ends and homogenous materials. In embodiments of the present invention, stiffness is the result of a cross-section that is varied so as to direct forces toward a location, such as where a button and actuator(s) are positioned. In one embodiment, more than one material is used, such as in a laminate or other form of composite. For instance, with the laminate, the cross section of one or more of the materials can be varied or different materials, having a different modulus may be used in the deformable region which may or may not change the total cross section, and yet both can contribute to a designed stiffness. In one embodiment, features such as rings or other local features can contribute to a chosen stiffness response to a user. In this manner, an effective or resulting stiffness can be tailored by design. Therefore, values for a stiffness resulting from a force applied at a given location may have to be determined either empirically or through finite element analysis. The embodiments disclosed are but a few ways to tailor stiffness and are not meant to be limiting or exhaustive in the methods available.

The region having a lower level of stiffness forms a deformable region, which generally coincides with the shape and location of button 20. An actuator is coupled to the deformable region to create a haptic effect that is substantially isolated and concentrated within the deformable region. Therefore, the deformable region is the approximate region that moves through contact with the actuator.

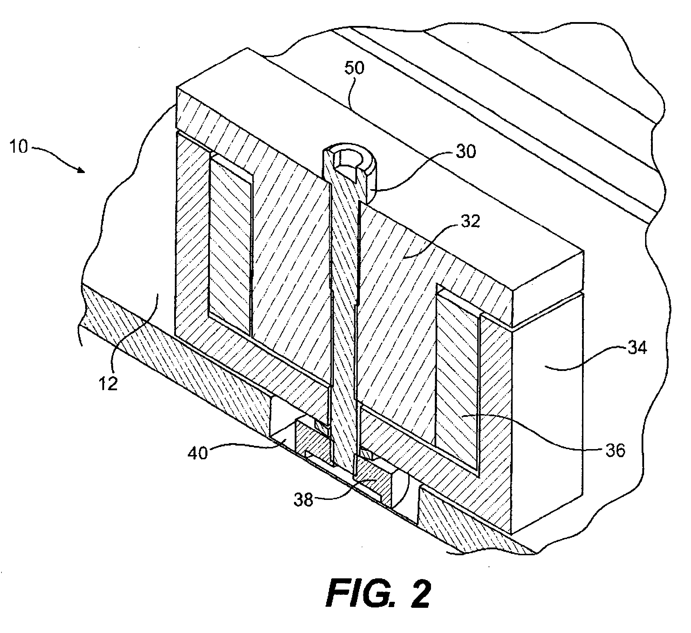

Fig. 2 is a cross-sectional view of the rear side of surface 12 and an actuator 50 in accordance with one embodiment of the present invention. Surface 12 includes a deformable region 40 which is formed by a removal of material from the rear side of surface 12. In one embodiment, surface 12 in regions that have not had material removed has a thickness of approximately 4.5 mm, and deformable region 40 has a thickness of approximately 1.5 mm.

Actuator 50 is coupled to the back side of surface 12 in an area other than deformable region 40. Actuator 50 includes a stationary electromagnet 34, a floating electromagnet 32, and a copper coil 36. A shaft 30 is attached to a plunger 38 and is embedded within floating electromagnetic 32.

In a no-power condition, plunger 38 rests or is fixed against the back (non-visible side) of deformable region 40. If plunger 38 is not fastened to the surface, a low spring force presses plunger 38 against the surface to prevent it from rattling during normal environmental conditions, such as driving a car over bump. When power is supplied to copper coil 36, electromagnets 32 and 34 are attracted to each other, creating substantial force. This force acts against a return spring (not shown) and pushes plunger 38 (if not attached to the surface) or pulls plunger 38 (if attached to the surface) to move the surface at deformable region 40, thereby deforming the surface to create a vibration or haptic effect. In one embodiment, the surface itself may function as the return spring.

Although actuator 50 is an electromagnetic type of actuator, any type of actuator can be used that can apply a haptic effect or force to surface 12 at deformable region 40. For example actuator 50 may be a "smart material" such as piezoelectric, electro-active polymers or shape memory alloys. Although actuator 50 is coupled to surface 12 both inside and outside region 40 in Fig. 2, in another embodiment actuator 50 may only be coupled to region 40. In this embodiment, actuator 50 may be an Eccentric Rotating Mass ("ERM") in which an eccentric mass is moved by a motor, or a Linear Resonant Actuator ("LRA") in which a mass attached to a spring is driven back and forth. In another embodiment, actuator 50 may be coupled to surface 12 inside region 40 and coupled to a separate grounded element, such as a frame or structural member. Further, a controller and other necessary components are coupled to actuator 50 in order to create the signals and power to actuator 50 to create the haptic effects.

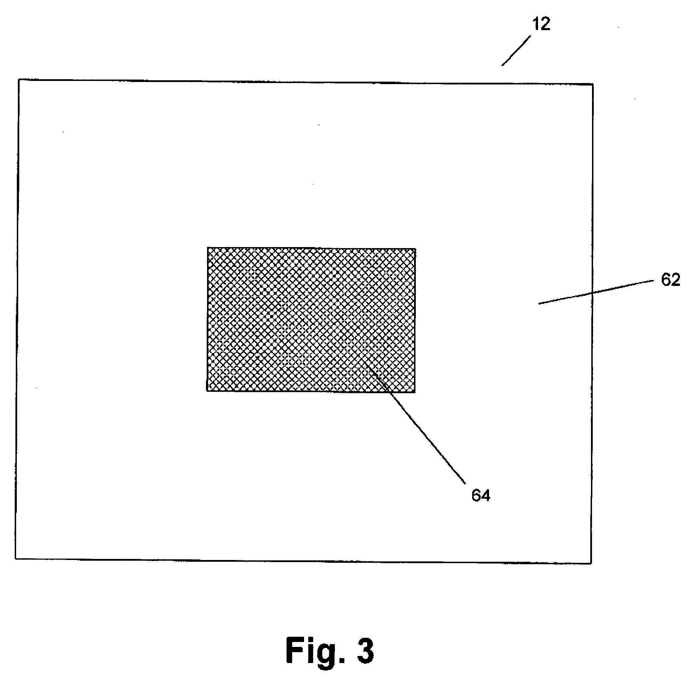

Fig. 3 is a plan view of a portion of the rear side of surface 12 not in accordance with one embodiment of the present invention. Region 64 is the region where material from surface 12 was removed to create a reduced stiffness region. The remainder of the portion of surface 12 shown in Fig. 3, region 62, has not had any material removed. In Fig. 3, region 64 approximately coincides with a deformable region of surface 12, and haptic effects that are applied by an actuator coupled to region 64 will be substantially isolated within region 64.

In another embodiment, region 64 has a tapered surface thickness forming a graduated reduced stiffness region rather than a constant surface thickness. The tapering can be formed by removing more material from the center of region 64 than from the edges in a generalized "V" shape. This creates a haptic effect that gets stronger at the center of region 64 and will produce the benefit of directing a user's finger which is on the edge of region 64 to the center of region 64. Thus, for example, a driver in an automobile can have their finger directed to a button through haptic feedback without having to look at the button.

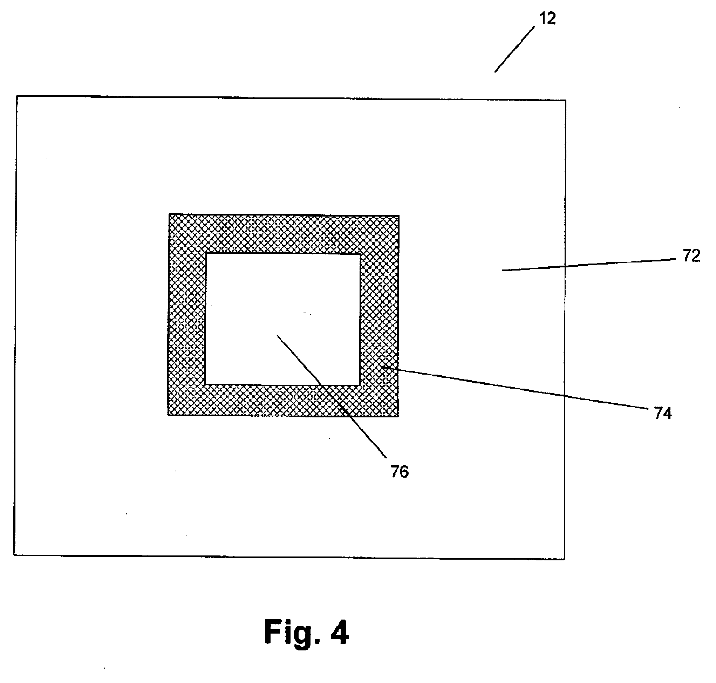

Fig. 4 is a plan view of a portion of the rear side of surface 12 in accordance with one embodiment of the present invention. Region 74 is the region where material from surface 12 was removed to create a reduced stiffness region. The remainder of the portion of surface 12 shown in Fig. 4, regions 72 and 76, have not had any material removed. In the embodiment shown in Fig. 4, the deformable region of surface 12 is approximately surrounding reduced thickness region 74 in combination with region 76. Thus, a portion of surface 12, region 76, is part of the deformable region even though it has not had material removed to form a reduced stiffness region. In the embodiment of Fig. 4, haptic effects that are applied by an actuator coupled to region 76 will be substantially isolated within regions 74 and 76.

In one embodiment, the appearance and state of each of the buttons 20 of Fig. 1 on the front side of surface 12 is enhanced by the addition of an electroluminescent luminescent layer and light emitting diodes ("LED's") applied on the rear side of surface 12 at the location of buttons 20. The luminescent layer creates illumination allowing the icons for the buttons to be visible at night giving the appearance of back lighting. When a button 20 is pressed, to provide further feedback to the user, LEDs may be turned on or off to indicate the state of a device controlled by a button, for example the level of heat for a heated seat.

Although embodiments disclosed above are of an automotive dashboard, the present invention can be implemented on a surface of any other type of device where isolated haptic effects are desired. Other embodiments can include aircraft buttons, buttons on appliances such as refrigerators, and buttons on medical devices where cleanliness concerns dictate having a smooth button surface. In another embodiment, rather than having an icon or other indicator of the presence of the button, the button is unmarked. This embodiment is useful for creating a hidden wall switch where the button is undetectable except when it is pressed and the isolated haptic effect is generated. In addition, features other than buttons can be designed with these localized haptics effects. Such other features can be, for example, a haptically enabled surface representing a linear slider, a curved slider or a circular slider. The slider would allow a user to move a finger along the haptic enabled surface such as to select from a table or to set a volume level.

As described, embodiments of the present invention create an isolated haptic effect which creates many advantages. Because the haptic effect is isolated, it is stronger and thus can be more easily felt through, for example, a driving glove. Further, multiple buttons 20 of Fig. 1 can be pressed at the same time without having the haptic effect from one button bleeding over to the other button, and each button can be separately discernable by the user. Embodiments of the present invention allow much greater design freedom of switch placement and increased aesthetics along with needed user haptic feedback. Further, embodiments of the present invention allow context to be included in the button press because the button does not always have to feel the same due to different available haptic effects. For example, if the button functionality was not permitted at the time of an attempted press, an error buzz effect could be played instead of a standard haptic effect. Further, the isolation of the haptic effect reduces power requirements by localizing the action to a small region, and reduces potential acoustic noise generation.

Although in embodiments disclosed above the reduced thickness region is created by removal of material from the rear side of the surface, other methods can be used to create a reduced thickness region. For example, instead of removal of material, material can be added to the surface in regions other than the reduced thickness region. In another embodiment, surface 12 can be formed from non-uniform materials. For example, a softer plastic region can be molded into a harder plastic base.

Several embodiments of the present invention are specifically illustrated and/or described herein.

## Claims

1. A surface (12) adapted to transmit a haptic feedback generated by an actuator (50) that is coupled to a deformation region (40) of said surface (12), said surface (12) is to be actuated by a user on said deformation region (40), and comprises:
a first region (72) having a first level of stiffness; and
a second region (74) having a second level of stiffness;
**characterized by**
a third region (76) having a third level of stiffness;
wherein said second level of stiffness is less than said first level of stiffness and said third level of stiffness, and wherein said second region (74) in combination with said third region (76) defines said deformation region (40) and wherein the haptic feedback is generally localized within said deformation region (40).

2. The surface (12) of claim 1, wherein said second region (74) generally forms an outer portion of said deformation region (40); or wherein said first region (72) has a first thickness and said second region (74) has a second thickness that is thinner than said first thickness and wherein said second thickness is preferably tapered.

3. The surface (12) of claim 1, wherein said deformation region (40) contacts the actuator (50) during the haptic feedback; or wherein the haptic feedback comprises a vibration of the deformation region.

4. A system for providing feedback to a user input, said system comprising a surface (12) according to claim 1;

5. The system of claim 4, wherein the haptic effect comprises a vibration of the deformation region (40).

6. The system of claim 4, wherein said actuator (50) comprises a smart material; or wherein said actuator (50) comprises a plunger (38) coupled to an electromagnet (34) and wherein said plunger (38) is preferably coupled to said deformation region (40).

7. The system of claim 4,
wherein said second region (74) generally forms an outer portion of said deformation region (40).

8. The system of claim 4, wherein said first region (72) has a first thickness and said second region (74) has a second thickness that is thinner than said first thickness.

9. The system of claim 9, wherein said second thickness is tapered.

10. A method of providing feedback for a haptic enabled location on a contiguous surface (12) to be actuated by a user, the surface (12) having a front side and a rear side, said method comprising:
defining a deformation region (40) on the surface (12) via an intersection of a first region (72) having a first level of stiffness; a second region (74) having a second level of stiffness, and a third region (76) having a third level of stiffness, wherein said second level of stiffness is less than said first level of stiffness and said third level of stiffness and wherein said second region (74) in combination with said third region (76) defines said deformation region (40),
receiving an indication that the haptic enabled location is pressed; and
generating a haptic effect on the deformation region (40) when the haptic enabled location is pressed, and
wherein said generating comprises contacting the deformation region (40) with an actuator (50) on the rear side.

11. The method of claim 10, further comprising generating illumination at the haptic enabled location when the haptic enabled location is pressed; or
further comprising providing an indicator of the haptic enabled location that is visible on the front side, wherein said deformation region (40) is adjacent to the indicator.

12. The method of claim 10, wherein the haptic effect indicates that the haptic enabled location was pressed in error; or
wherein the haptic effect indicates that a haptic enabled location press event has been recognized.

## Patentansprüche

1. Oberfläche (12), die dazu ausgelegt ist, eine haptische Rückmeldung zu übertragen, die durch einen Aktuator (50) erzeugt wird, der mit einem Verformungsbereich (40) der Oberfläche (12) gekoppelt ist, wobei die Oberfläche (12) durch einen Benutzer am Verformungsbereich (40) betätigt werden soll, und umfasst:
einen ersten Bereich (72) mit einem ersten Steifigkeitsniveau; und
einen zweiten Bereich (74) mit einem zweiten Steifigkeitsniveau;
**gekennzeichnet durch**
einen dritten Bereich (76) mit einem dritten Steifigkeitsniveau;
wobei das zweite Steifigkeitsniveau geringer ist als das erste Steifigkeitsniveau und das dritte Steifigkeitsniveau; und wobei der zweite Bereich (74) in Kombination mit dem dritten Bereich (76) den Verformungsbereich (40) definiert, und wobei die haptische Rückmeldung im Allgemeinen innerhalb des Verformungsbereichs (40) lokalisiert ist.

2. Oberfläche (12) nach Anspruch 1, wobei der zweite Bereich (74) im Allgemeinen einen äußeren Abschnitt des Verformungsbereichs (40) bildet; oder wobei der erste Bereich (72) ein erste Dicke aufweist und der zweite Bereich (74) eine zweite Dicke aufweist, die dünner ist als die erste Dicke, und wobei die zweite Dicke vorzugsweise verjüngt ist.

3. Oberfläche (12) nach Anspruch 1, wobei der Verformungsbereich (40) den Aktuator (50) während der haptischen Rückmeldung kontaktiert; oder wobei die haptische Rückmeldung eine Vibration des Verformungsbereichs umfasst.

4. System zum Liefern einer Rückmeldung auf eine Benutzereingabe, wobei das System eine Oberfläche (12) nach Anspruch 1 umfasst.

5. System nach Anspruch 4, wobei der haptische Effekt eine Vibration des Verformungsbereichs (40) umfasst.

6. System nach Anspruch 4, wobei der Aktuator (50) ein intelligentes Material umfasst; oder wobei der Aktuator (50) einen Tauchkolben (38) umfasst, der mit einem Elektromagneten (34) gekoppelt ist, und wobei der Tauchkolben (38) vorzugsweise mit dem Verformungsbereich (40) gekoppelt ist.

7. System nach Anspruch 4, wobei der zweite Bereich (74) im Allgemeinen einen äußeren Abschnitt des Verformungsbereichs (40) bildet.

8. System nach Anspruch 4, wobei der erste Bereich (72) eine erste Dicke aufweist und der zweite Bereich (74) eine zweite Dicke aufweist, die dünner ist als die erste Dicke.

9. System nach Anspruch 9, wobei die zweite Dicke verjüngt ist.

10. Verfahren zum Liefern einer Rückmeldung für einen haptikfähigen Ort an einer zusammenhängenden Oberfläche (12), die durch einen Benutzer betätigt werden soll, wobei die Oberfläche (12) eine Vorderseite und eine Rückseite aufweist, wobei das Verfahren umfasst:
Definieren eines Verformungsbereichs (40) an der Oberfläche (12) über einen Schnitt eines ersten Bereichs (72) mit einem ersten Steifigkeitsniveau; eines zweiten Bereichs (74) mit einem zweiten Steifigkeitsniveau und eines dritten Bereichs (76) mit einem dritten Steifigkeitsniveau, wobei das zweite Steifigkeitsniveau geringer ist als das erste Steifigkeitsniveau und das dritte Steifigkeitsniveau, und wobei der zweite Bereich (74) in Kombination mit dem dritten Bereich (76) den Verformungsbereich (40) definiert;
Empfangen einer Angabe, dass der haptikfähige Ort gedrückt wird; und
Erzeugen eines haptischen Effekts am Verformungsbereich (40), wenn der haptikfähige Ort gedrückt wird, und
wobei das Erzeugen das Kontaktieren des Verformungsbereichs (40) mit einem Aktuator (50) auf der Rückseite umfasst.

11. Verfahren nach Anspruch 10, das ferner das Erzeugen einer Beleuchtung am haptikfähigen Ort umfasst, wenn der haptikfähige Ort gedrückt wird; oder
das ferner das Vorsehen eines Indikators des haptikfähigen Orts umfasst, der auf der Vorderseite sichtbar ist, wobei der Verformungsbereich (40) zum Indikator benachbart ist.

12. Verfahren nach Anspruch 10, wobei der haptische Effekt angibt, dass der haptikfähige Ort irrtümlich gedrückt wurde; oder
wobei der haptische Effekt angibt, dass ein Druckereignis des haptikfähigen Orts erkannt wurde.

## Revendications

1. Surface (12), adaptée pour transmettre une rétroaction haptique produite par un actionneur (50), qui est couplé à une région de déformation (40) de ladite surface (12), ladite surface (12) devant être actionnée par un utilisateur sur ladite région de déformation (40) et comprenant :
une première région (72) ayant un premier niveau de rigidité et
une deuxième région (74), ayant un deuxième niveau de rigidité,
**caractérisée par**
une troisième région (76) ayant un troisième niveau de rigidité ;
dans laquelleledit deuxième niveau de rigidité est inférieur audit premier niveau de rigidité et audit troisième niveau de rigidité et dans laquelle ladite deuxième région (74), définit,en combinaison avec ladite troisième région (76), ladite région de déformation (40) et dans laquelle la rétroaction haptique est généralement localisée dans ladite région de déformation (40).

2. Surface (12) selon la revendication 1, dans laquelle ladite deuxième région (74) forme généralement une partie extérieure de ladite région de déformation (40) ou dans laquelle ladite première région (72) a une première épaisseur et ladite deuxième région (74) a une deuxième épaisseur, qui est inférieure à ladite première épaisseur et dans laquelle ladite deuxième épaisseur est de préférence conique.

3. Surface (12) selon la revendication 1, dans laquelle ladite région de déformation (40) touche l'actionneur (50) pendant la rétroaction haptique ou dans laquelle la rétroaction haptique comprend une vibration de la région de déformation.

4. Système destiné à fournir une rétroaction à une entrée par un utilisateur, ledit système comprenant une surface (12) selon la revendication 1.

5. Système selon la revendication 4, dans lequel l'effet haptique comprend une vibration de la région de déformation (40).

6. Système selon la revendication 4, dans lequel ledit actionneur (50) comprend un matériau adaptatif ou dans lequel ledit actionneur (50) comprend un piston (38), couplé à un électro-aimant (34) et dans lequel ledit piston (38) est couplé de préférence à ladite région de déformation (40).

7. Système selon la revendication 4, dans lequel ladite deuxième région (74) forme généralement une partie extérieure de ladite région de déformation (40).

8. Système selon la revendication 4, dans lequel ladite première région (72) a une première épaisseur et ladite deuxième région (74) a une deuxième épaisseur, qui est inférieure à ladite première épaisseur.

9. Système selon la revendication 9, dans lequel ladite deuxième épaisseur est conique.

10. Procédé, consistant à délivrer une rétroaction pour un emplacement validé haptique sur une surface (12) contiguë, à actionner par un utilisateur, la surface (12) ayant une face frontale et une face arrière, ledit procédé comprenant les étapes, consistant à :
définir une région de déformation (40) sur la surface (12) par l'intermédiaire d'une intersection d'une première région (72) ayant un premier niveau de rigidité,d'une deuxième région (74) ayant un deuxième niveau de rigidité et d'une troisième région (76) ayant un troisième niveau de rigidité, dans lequel ledit deuxième niveau de rigidité est inférieur audit premier niveau de rigidité et audit troisième niveau de rigidité et dans lequel ladite deuxième région (74) définit, en combinaison avec ladite troisième région (76), ladite région de déformation (40),
recevoir une indication, selon laquelle une pression est exercée sur l'emplacement validé haptique,
produire un effet haptique sur la région de déformation (40), lorsqu'une pression est exercée sur l'emplacement validé haptique et
dans lequel ladite opération de production comprend l'opération consistant à toucher la région de déformation (40) sur la face arrière avec un actionneur (50).

11. Procédé selon la revendication 10, comprenant en outre l'étape, consistant à générer une illumination sur l'emplacement validé haptique, lorsqu'une pression est exercée sur l'emplacement validé haptique ou
comprenant en outre l'opération consistant à fournir un indicateur de l'emplacement validé haptique qui soit visible sur la face avant, dans lequel ladite région de déformation (40) est adjacente à l'indicateur.

12. Procédé selon la revendication 10, dans lequel l'effet haptique indique qu'une pression a été exercée par erreur sur l'emplacement validé haptique ou
dans lequel l'effet haptique indique qu'un événement de pression sur l'emplacement validé haptique a été reconnu.
